# EUROPEAN PATENT APPLICATION

(11) **EP 3 076 598 A1**
(43) Date of publication of application: **05.10.2016**
(21) Application number: 16158920.5
(22) Date of filing: 07.03.2016
(51) Int. Cl.: H04L 12/24

(54) **DISPLAY METHOD FOR DISPLAYING COMMUNICATION NETWORK AND DEVICE GROUPS, DISPLAY PROGRAM, AND INFORMATION PROCESSING DEVICE**

(30) Priority: 31.03.2015 JP 2015073116
(71) Applicant: FUJITSU LIMITED, Kawasaki-shi, Kanagawa 211-8588 (JP)
(72) Inventor: Tashiro, Masayuki, Kanagawa, 211-8588 (JP); Fujimoto, Mitsutaka, Osaka, 540-0001 (JP); Nakagawa, Yoshiaki, Osaka, 540-0001 (JP); Wada, Shinichirou, Fukuoka-shi, 814-8588 (JP)
(74) Representative: Hoffmann Eitle

(57) **Abstract**

A computer displays a first symbol indicating a communication network (290), displays a second symbol (201, 211, 221) indicating a device group to be displayed from among a first device group that a device belongs to (221) and a second device group that has a higher order than the first device group (201, 211), and non-displays a symbol indicating a device group that is not a target to be displayed from among the first device group (221) and the second device group (201, 211). The computer displays a line segment connecting the first symbol and the second symbol.

## Description

### FIELD

The embodiments discussed herein are related to a display method for displaying a communication network and device groups.

### BACKGROUND

In the management of a communication network, a topology screen is displayed on a display device such that an administrator can easily grasp a connection relationship between devices in the communication network. Hereinafter, the communication network may be referred to simply as a "network".

When the topology screen is generated, software for managing a network is used. A computer that executes this type of software automatically retrieves devices in a network to be managed or a connection relationship between the devices so as to generate a topology screen.

In addition, a computerized method for managing a storage area network is known.

Note that a technology described in the following document is known.

Document 1: Japanese Laid-open Patent Publication No. 2004-152282

### SUMMARY

It is an object in one aspect of the invention to intelligibly display a connection relationship between a communication network and devices.

According to an aspect of the embodiment, a display method includes displaying, by a computer, a first symbol indicating a communication network, displaying a second symbol indicating a device group to be displayed from among a first device group that a device belongs to and a second device group that has a higher order than the first device group, and non-displaying a symbol indicating a device group that is not a target to be displayed from among the first device group and the second device group, and displaying, by a computer, a line segment connecting the first symbol and the second symbol.

### BRIEF DESCRIPTION OF DRAWINGS

FIG. 1 illustrates a hierarchical structure of device groups.
FIG. 2A illustrates a reference example (no. 1) of a screen transition.
FIG. 2B illustrates a reference example (no. 2) of a screen transition.
FIG. 3 illustrates an exemplary functional configuration of an information processing device.
FIG. 4A illustrates information (no. 1) stored in a storing unit.
FIG. 4B illustrates information (no. 2) stored in a storing unit.
FIG. 5 is a flowchart illustrating a display process according to the embodiments.
FIG. 6A is a flowchart (no. 1) illustrating a view switching process.
FIG. 6B is a flowchart (no. 2) illustrating a view switching process.
FIG. 6C is a flowchart (no. 3) illustrating a view switching process.
FIG. 6D is a flowchart (no. 4) illustrating a view switching process.
FIG. 6E is a flowchart (no. 5) illustrating a view switching process.
FIG. 7A is a flowchart (no. 1) illustrating a device group developing process.
FIG. 7B is a flowchart (no. 2) illustrating a device group developing process.
FIG. 7C is a flowchart (no. 3) illustrating a device group developing process.
FIG. 7D is a flowchart (no. 4) illustrating a device group developing process.
FIG. 8A is a flowchart (no. 1) illustrating a device group converging process.
FIG. 8B is a flowchart (no. 2) illustrating a device group converging process.
FIG. 8C is a flowchart (no. 3) illustrating a device group converging process.
FIG. 9A illustrates a first example (no. 1) of a screen transition in a display process according to the embodiments.
FIG. 9B illustrates a first example (no. 2) of a screen transition in a display process according to the embodiments.
FIG. 9C illustrates a first example (no. 3) of a screen transition in a display process according to the embodiments.
FIG. 10A illustrates a second example (no. 1) of a screen transition in a display process according to the embodiments.
FIG. 10B illustrates a second example (no. 2) of a screen transition in a display process according to the embodiments.
FIG. 11 illustrates a hardware configuration of an information processing device.

### DESCRIPTION OF EMBODIMENTS

Preferred embodiments of the present invention will be explained with reference to accompanying drawings.

In networks for enterprises or the like, two or more networks constructed in different bases are sometimes connected via an external network such as a carrier channel. In such a network, an administrator generates a topology screen of devices in the network for each of the bases, and manages the topology screen.

However, when the topology screen of the devices is managed for each of the bases, a symbol (an icon) indicating an external network is displayed on each of the topology screens. Therefore, when the topology screens for a plurality of bases are displayed side by side, it is difficult to grasp a connection relationship between the plurality of bases.

Further, in a case in which the plurality of bases are hierarchical, when the topology screens of the devices are converged, and a display is changed so as to indicate symbols indicating the respective bases, the symbol indicating the external network is non-displayed. Accordingly, the connection relationship between the bases is not grasped by only viewing a display screen.

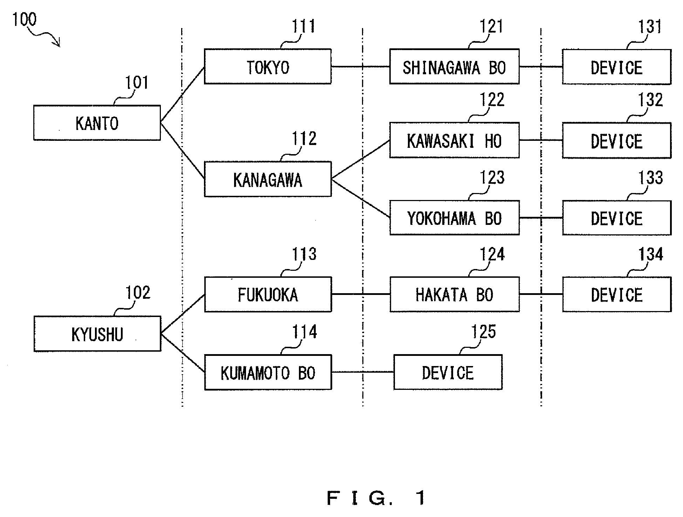

FIG. 1 illustrates a hierarchical structure of device groups.

As illustrated in FIG. 1, a communication network 100 described herein as an example is divided into a device group 101 named Kanto and a device group 102 named Kyushu. In the description below, the device group 101 named Kanto and the device group 102 named Kyushu are also referred to as Kanto group and Kyushu group, respectively.

Kanto group 101 is divided into a device group 111 named Tokyo and a device group 112 named Kanagawa. A device group 121 named Shinagawa branch office is under the device group 111 named Tokyo. Devices installed in Shinagawa branch office, including a device 131, belong to the device group 121 named Shinagawa branch office. In addition, a device group 122 named Kawasaki head office and a device group 123 named Yokohama branch office are under the device group 112 named Kanagawa. Devices installed in Kawasaki head office, including a device 132, belong to the device group 122 named Kawasaki head office. Devices installed in Yokohama branch office, including a device 133, belong to the device group 123 named Yokohama branch office. In the description below, the device group 111 named Tokyo and the device group 112 named Kanagawa are also referred to as Tokyo group and Kanagawa group, respectively. Further, the device group 121 named Shinagawa branch office, the device group 122 named Kawasaki head office, and the device group 123 named Yokohama branch office are also referred to as Shinagawa group, Kawasaki group, and Yokohama group, respectively.

Kyushu group 102 is divided into a device group 113 named Fukuoka and a device group 114 named Kumamoto branch office. A device group 124 named Hakata branch office is under the device group 113 named Fukuoka. Devices installed in Hakata branch office, including a device 134, belong to the device group 124 named Hakata branch office. In addition, devices installed in Kumamoto branch office, including a device 125, belong to the device group 114 named Kumamoto branch office. In the description below, the device group 124 named Hakata branch office and the device group 114 named Kumamoto branch office are also referred to as Hakata group and Kumamoto group, respectively.

As described above, respective devices in the communication network 100 belong to any one of Shinagawa group 121, Kawasaki group 122, Yokohama group 123, Hakata group 124, and Kumamoto group 114. Namely, the communication network 100 is configured of five bases, and devices in the respective bases are connected to each other via a carrier channel or the like.

Each of a plurality of devices in a communication network corresponds, for example, to an L2 switch, an L3 switch, a router, a load balancer, a gateway, a band controller, or the like.

When the communication network 100 includes a large number of devices, it is difficult to display a connection relationship between all of the devices on a display device. Even when the connection relationship between all of the devices can be displayed, it is difficult to discover a desired device. Accordingly, device groups are hierarchically structured, as illustrated in FIG. 1, a topology screen of devices is generated and displayed for each of the bases, and consequently a display can be easily viewed.

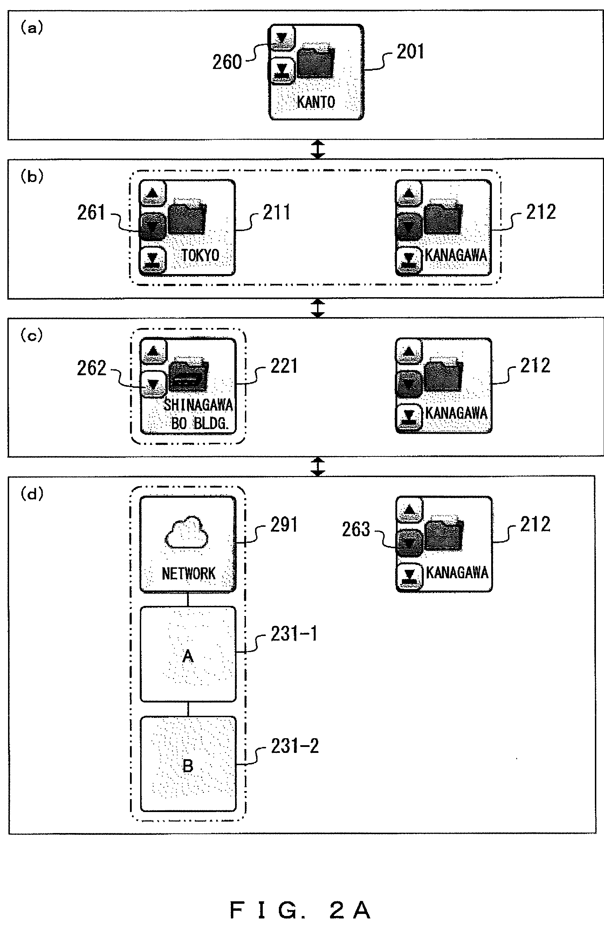

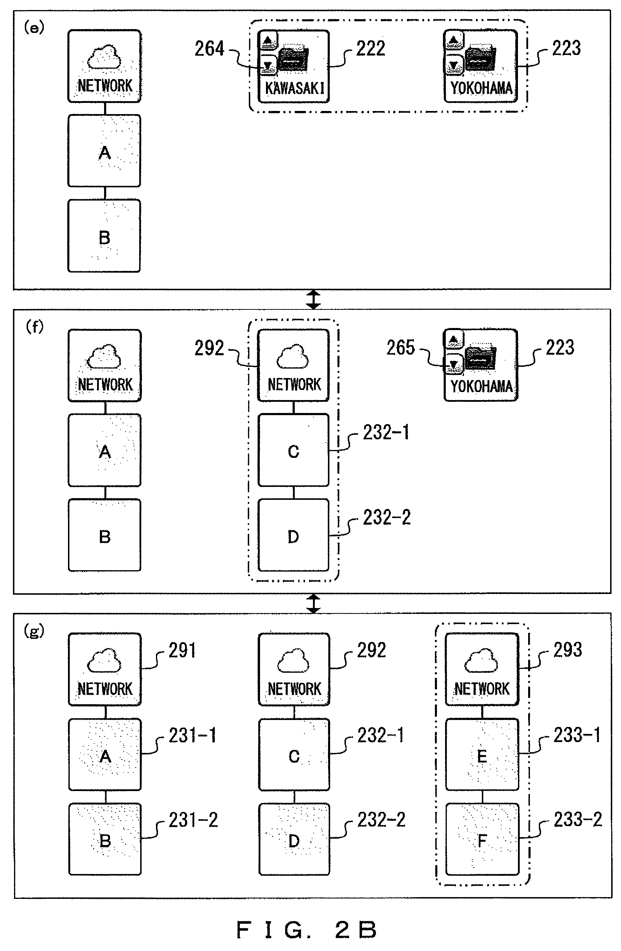

FIGS. 2A and 2B illustrate a reference example of a screen transition.

FIGS. 2A and 2B illustrate a state of a screen transition when a topology screen of devices included in Kanto group 101 in the communication network 100 illustrated in FIG. 1 is displayed.

First, when a prescribed operation is performed so as to select a display of Kanto group 101, a symbol (an icon) 201 indicating Kanto group is displayed on a display screen, as illustrated in (a) of FIG. 2A. In this state, when an operation such as clicking is performed on a button for development 260 on a side of a left-hand end of an icon 201, the icon 201 disappears, and an icon 211 indicating Tokyo group and an icon 212 indicating Kanagawa group are displayed, as illustrated in (b).

Next, when an operation is performed on a button for development 261 of the icon 211 indicating Tokyo group, the icon 211 disappears, and an icon 221 indicating Shinagawa group is displayed, as illustrated in (c). When an operation is performed on a button for development 262 of the icon 221 indicating Shinagawa group, the icon 221 disappears, and icons 231-1 and 231-2 indicating devices that belong to Shinagawa group and an icon 291 indicating a network are displayed, as illustrated in (d). In this case, line segments indicating a connection relationship between the icons 231-1 and 231-2 indicating the devices and the icon 291 indicating the network are also displayed on a screen. Note that the icon 291 indicates a network (for example, a carrier channel or the like) that connects the devices that belong to Shinagawa group and devices that belong to another device group.

In this state, when an operation is performed on a button for development 263 of the icon 212 indicating Kanagawa group, the icon 212 disappears, and an icon 222 indicating Kawasaki group and an icon 223 indicating Yokohama group are displayed, as illustrated in (e) of FIG. 2B.

When an operation is further performed on a button for development 264 of the icon 222 indicating Kawasaki group, the icon 222 disappears, and icons 232-1 and 232-2 indicating devices that belong to Kawasaki group and an icon 292 indicating a network are displayed, as illustrated in (f). In this case, line segments indicating a connection relationship between the icons 232-1 and 232-2 indicating the devices and the icon 292 indicating the network are also displayed on the screen.

Then, when an operation is performed on a button for development 265 of the icon 223 indicating Yokohama group, the icon 223 disappears, and icons 233-1 and 233-2 indicating devices that belong to Yokohama group and an icon 293 indicating a network are displayed, as illustrated in (g). In this case, line segments indicating a connection relationship between the icons 233-1 and 233-2 indicating the devices and the icon 293 indicating the network are also displayed on the screen.

As described above, in the reference example, when an icon indicating a higher-order device group including a plurality of device groups is developed, icons indicating the device groups are merely displayed, as illustrated in (b) of FIG. 2A and (e) of FIG. 2B. Accordingly, it is difficult to grasp a connection relationship between the device groups indicated by the icons.

Further, in the reference example, when a lowest-order device group is developed, an icon indicating a network as well as icons indicating devices that belong to the lowest-order device group is displayed. In addition, when a topology screen is managed in device-group units, the icon indicating the network is displayed on each of the topology screens. Therefore, as illustrated in (g) of FIG. 2B, the device 231-1 that belongs to Shinagawa group, the device 232-1 that belongs to Kawasaki group, and the device 233-1 that belongs to Yokohama group appear to be connected to respective different networks.

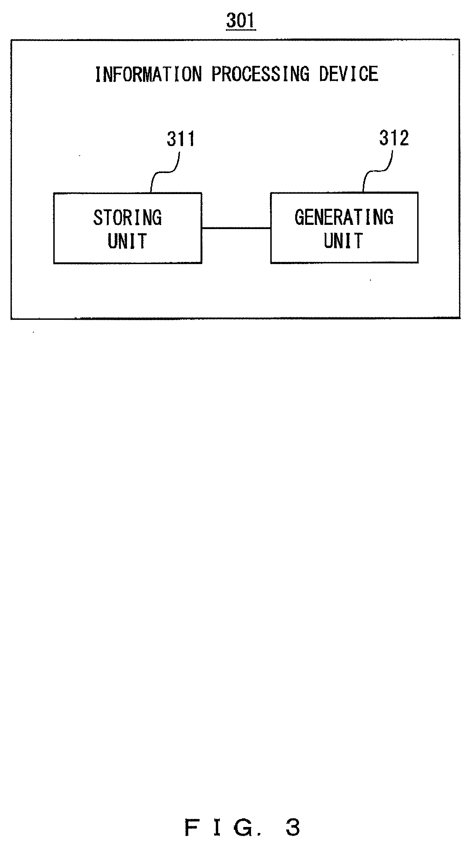

FIG. 3 illustrates an exemplary functional configuration of an information processing device. An information processing device 301 of FIG. 3 includes a storing unit 311 and a generating unit 312, and the information processing device 301 performs a process of displaying a topology screen.

When the process of displaying the topology screen is performed, the storing unit 311 stores information relating to a device, information relating to a first device group that the device belongs to, and information relating to a second device group that has an order higher than that of the first device group. The generating unit 312 receives an instruction to display a specific device or device group from among a plurality of devices and device groups.

Next, the generating unit 312 displays icons indicating the device, the device group, and the network on the basis of the received instruction, and generates display data that displays line segments indicating a connection relationship between them.

Here, the generating unit 312 switches display modes of the icon indicating the network in accordance with whether the network belongs to the specific device group. When the device group that the network belongs to has not been specified, the generating unit 312 always displays the icon indicating the network, regardless of a displayed combination of a device and a device group. In this case, the generating unit 312 displays a line segment connecting the icon indicating the device and the icon indicating the network and a line segment connecting the icon indicating the device group and the icon indicating the network in accordance with the displayed combination of the device and the device group.

When a specific device group has been specified as a device group that the network belongs to, the generating unit 312 displays the icon indicating the network only when a device or a device group under the specified device group is displayed.

In the display process described above, a connection relationship between a network and devices can be intelligibly displayed.

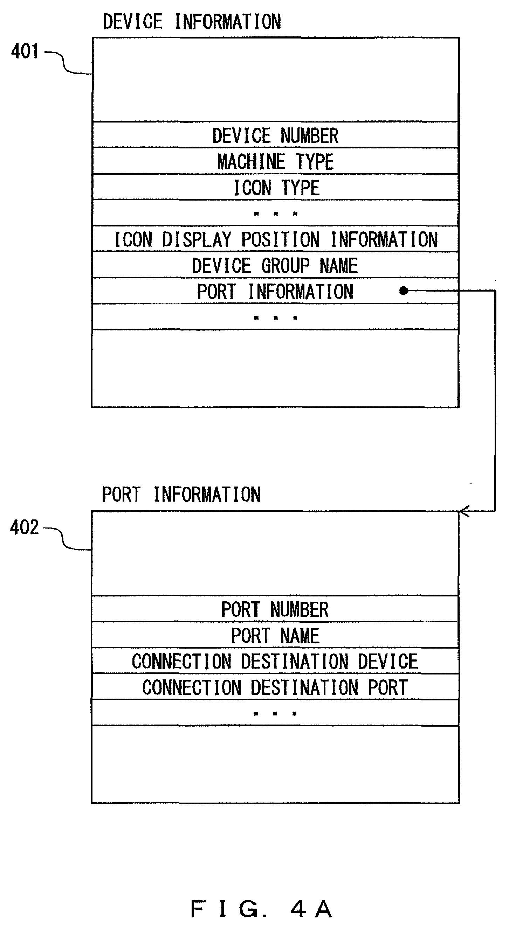

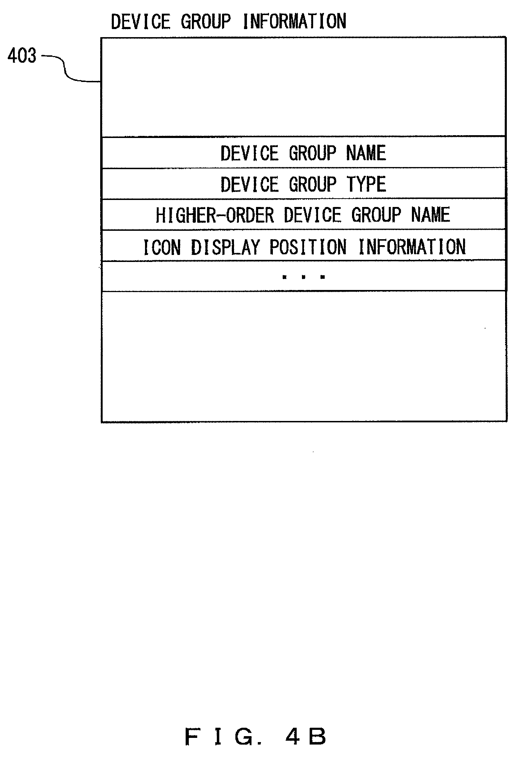

FIGS. 4A and 4B illustrate information stored in the storing unit 311 in the process of displaying the topology screen. Device information 401 illustrated in an upper portion of FIG. 4A is an example of information relating to each of the devices (including a network) in a communication network, and port information 402 illustrated in a lower portion is an example of information relating to a port that each of the devices has. Device group information 403 illustrated in FIG. 4B is an example of information relating to a device group.

The device information 401 includes a device number, a machine type, an icon type, icon display position information, a device group name, and port information.

The device number is identification information of a device. The machine type indicates whether a machine is a device (an L3 switch, a router, or the like) or a network. The icon type indicates the type of an icon that corresponds to a symbol indicating a device or a network. The icon display position information indicates a display position of an icon on a display screen. The device group name is identification information of a device group that a device belongs to. The port information indicates a pointer that points to the port information 402.

The port information 402 includes a port number, a port name, a connection destination device, and a connection destination port.

The port number is identification information of a port, and the port name indicates the name of a port. The connection destination device indicates a device number of a device that is a connection destination of a port, and the connection destination port indicates a port number of a connection destination port that the connection destination device has.

The device group information 403 includes a device group name, a device group type, a higher-order device group name, and icon display position information.

The device group name is identification information of a device group. The device group type indicates the type of a device group. When no device groups exist in a lower order of a local device group, the device group type is "device". When a device group exists in a lower order of a local device group, the device group type is "group".

The higher-order device group name is identification information of a higher-order device group including a local device group. The icon display position information indicates a display position of an icon on a display screen.

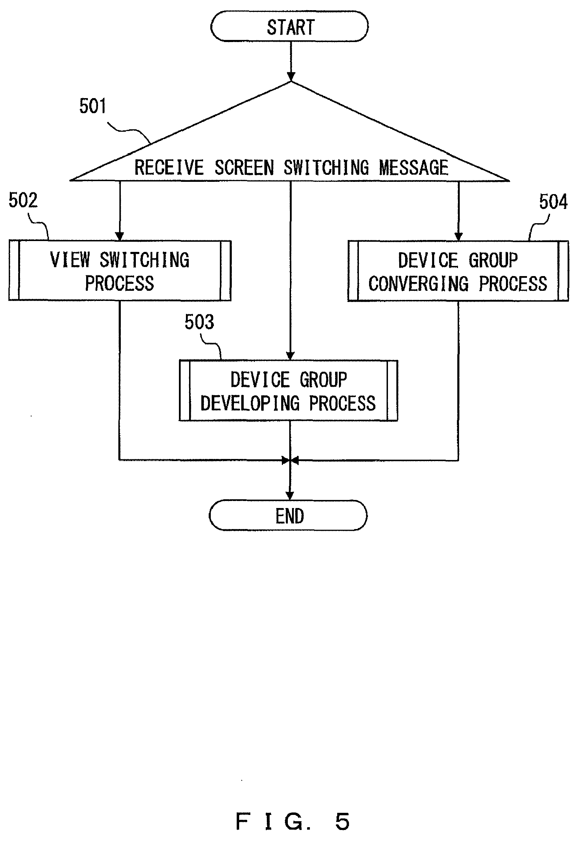

FIG. 5 is a flowchart illustrating a display process according to the embodiments.

The display process illustrated in FIG. 5 is performed when a topology screen indicating a connection relationship between a plurality of devices in a communication network starts being displayed, or when a displayed screen is switched. First, the generating unit 312 waits for a screen switching message to be input in a state in which a prescribed screen is being displayed. The screen switching message is a message indicating an instruction to switch views, to develop a device group, or to converge a device group. When an operator such as an administrator performs a prescribed input operation by using an input device of the information processing device 301, the generating unit 312 receives the screen switching message, and performs a display process according to the message (step 501) .

When the generating unit 312 receives a message indicating an instruction to switch views as the screen switching message, the generating unit 312 performs a view switching process (step 502). When the generating unit 312 receives a message indicating an instruction to develop a device group as the screen switching message, the generating unit 312 performs a device group developing process (step 503). When the generating unit 312 receives a message indicating an instruction to converge a device group as the screen switching message, the generating unit 312 performs a device group converging process (step 504).

Respective processes of the view switching process, the device group developing process, and the device group converging process are sequentially described below.

### [View switching process]

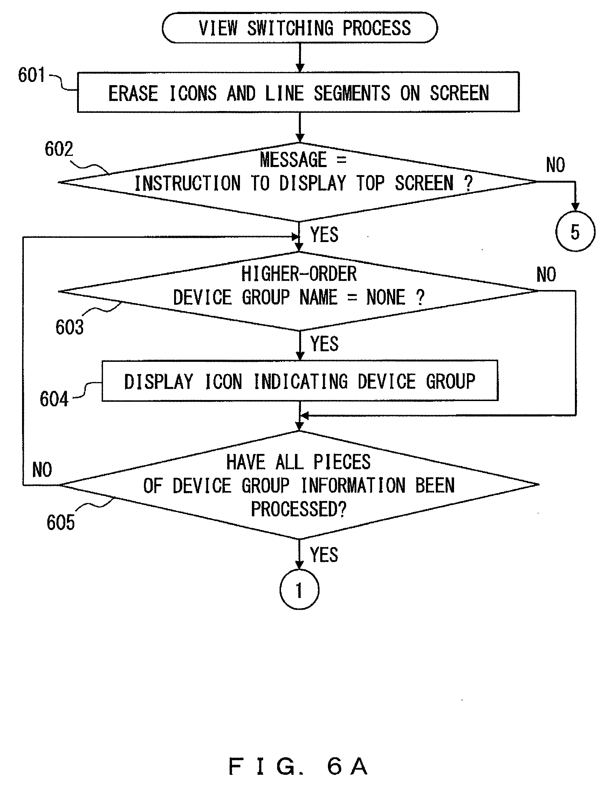

FIGS. 6A to 6E are flowcharts illustrating the view switching process.

Upon receipt of a message indicating an instruction to switch views, the generating unit 312 first erases a physical map displayed on a screen, namely, all of the icons, the line segments indicating a connection relationship between the icons, and the like, as illustrated in FIG. 6A (step 601).

Next, the generating unit 312 checks whether a message indicates an instruction to display a top screen (step 602). The top screen is a screen that displays an icon indicating the highest-order device group in the communication network 100. When a message indicates an instruction to display the top screen (step 602: YES), the processes of steps 603 to 615 are continuously performed. When a message does not indicate an instruction to display the top screen (step 602: NO), the generating unit 312 performs the processes of steps 621 to 633.

Upon receipt of a message indicating an instruction to display the top screen, the generating unit 312 then performs a process of displaying an icon. In the process of displaying the icon, the generating unit 312 first references one piece of device group information 403, and checks whether there is a higher-order device group name (step 603). When there is no higher-order device group name (step 603: YES), the generating unit 312 arranges and displays an icon indicating a device group on the basis of the icon display position information in the device group information 403 (step 604). Then, the generating unit 312 checks whether the process of step 603 and the processes that follow have been performed on all pieces of device group information 403 (step 605). When there is a higher-order device group name (step 603: NO), the generating unit 312 skips the process of step 604, and performs the checking process of step 605.

When there are pieces of device group information 403 on which the process of step 603 and the processes that follow have not been performed (step 605: NO), the generating unit 312 performs the process of step 603 and the processes that follow on the unprocessed pieces of device group information 403.

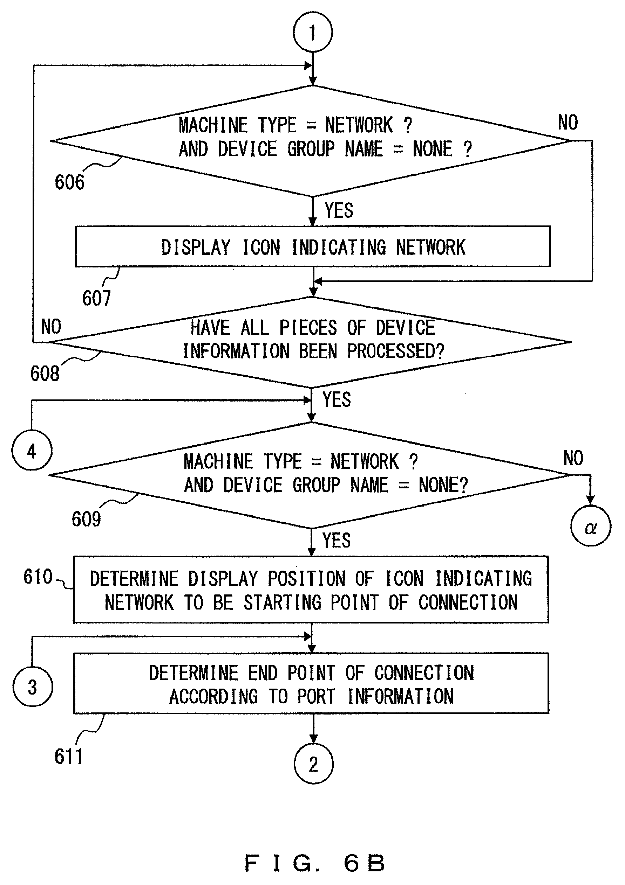

When the process of step 603 and the processes that follow have been performed on all pieces of device group information 403 (step 605: YES), the generating unit 312 then references one piece of device information 401, and checks a machine type and a device group name (step 606), as illustrated in FIG. 6B. In step 606, the generating unit 312 checks whether a machine type is a network and whether a device group name is "none". When a combination of a machine type and a device group name is the combination above (step 606: YES), the generating unit 312 displays an icon indicating a network on the basis of icon display position information in the device information 401 (step 607). Then, the generating unit 312 checks whether the process of step 606 and the processes that follow have been performed on all pieces of device information 401 (step 608). When a combination of a machine type and a device group name is different from the combination above (step 606: NO), the generating unit 312 skips the process of step 607, and performs the checking process of step 608.

When there are pieces of device information 401 on which the process of step 606 and the processes that follow have not been performed (step 608: NO), the generating unit 312 performs the process of step 606 and the processes that follow on the unprocessed pieces of device information 401.

When the process of step 606 and the processes that follow have been performed on all pieces of device information 401 (step 608: YES), the generating unit 312 performs a process of connecting icons. In the process of connecting icons, the generating unit 312 first references one piece of device information 401, and checks a machine type and a device group name (step 609). In step 609, the generating unit 312 checks whether a machine type is a network and whether a device group name is "none". When a combination of a machine type and a device group name is different from the combination above (step 609: NO), the generating unit 312 skips the processes of steps 610 to 614, and performs the checking process of step 615.

When a combination of a machine type and a device group name is the combination above (step 609: YES), the generating unit 312 determines an icon display position specified by icon display position information in the device information 401 to be a starting point of a connection (step 610).

The generating unit 312 then references one piece of port information 402 indicated in the device information 401, and determines an end point of the connection on the basis of a connection destination device and the device group information 403 (step 611). In step 611, the generating unit 312 determines the highest-order device group that accommodates the connection destination device, and determines a display position of an icon indicating the highest-order device group to be the end point of the connection.

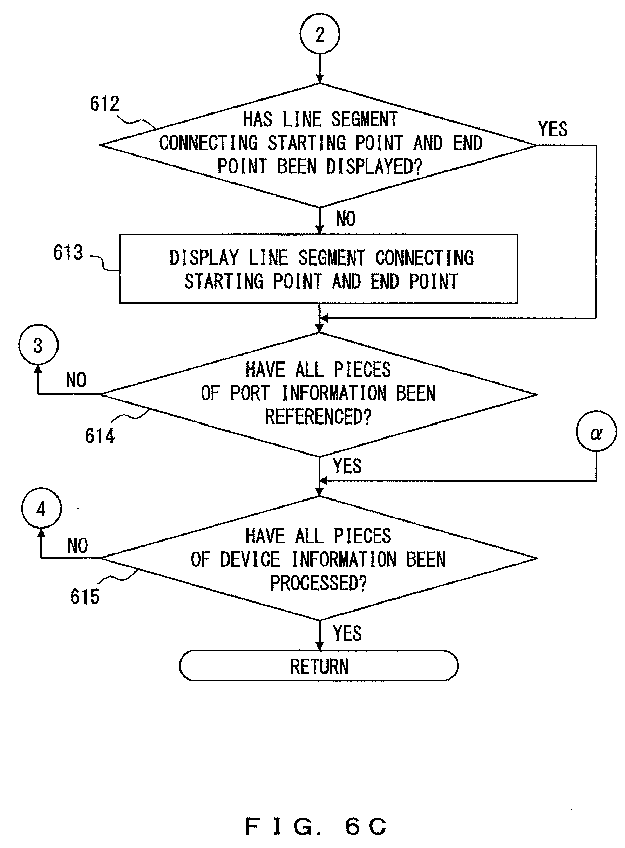

Then, as illustrated in FIG.6C, the generating unit 312 checks whether a line segment connecting the starting point and the end point that have been determined has been displayed (step 612). When a line segment connecting the starting point and the end point that have been determined has not been displayed (step 612: NO), the generating unit 312 displays the line segment connecting the starting point and the end point (step 613). Then, the generating unit 312 checks whether all pieces of port information 402 indicated by the device information 401 have been referenced and whether the process of step 611 and the processes that follow have been performed on all pieces of port information 402 (step 614). When a line segment connecting the starting point and the end point that have been determined has been displayed (step 612: YES), the generating unit 312 skips the process of step 613, and performs the checking process of step 614. When there are pieces of port information 402 that have not been referenced in the process of step 611 and the processes that follow (step 614: NO), the generating unit 312 performs the process of step 611 and the processes that follow on the pieces of port information 402 that have not been referenced.

When all pieces of port information 402 have been referenced and processed (step 614: YES), the generating unit 312 checks whether the process of step 609 and the processes that follow have been performed on all pieces of device information 401 (step 615). Note that the checking process of step 615 is also performed when a combination of a machine type and a device group name of referenced device information 401 is not a combination of a network and "none" in step 609 (step 609: NO), as described above. When there are pieces of device information 401 on which the process of step 609 and the processes that follow have not been performed (step 615: NO), the generating unit 312 performs the process of step 609 and the processes that follow on the unprocessed pieces of device information 401. When the process of step 609 and the processes that follow have been performed on all pieces of device information 401 (step 615: YES), the generating unit 312 terminates the view switching process (return).

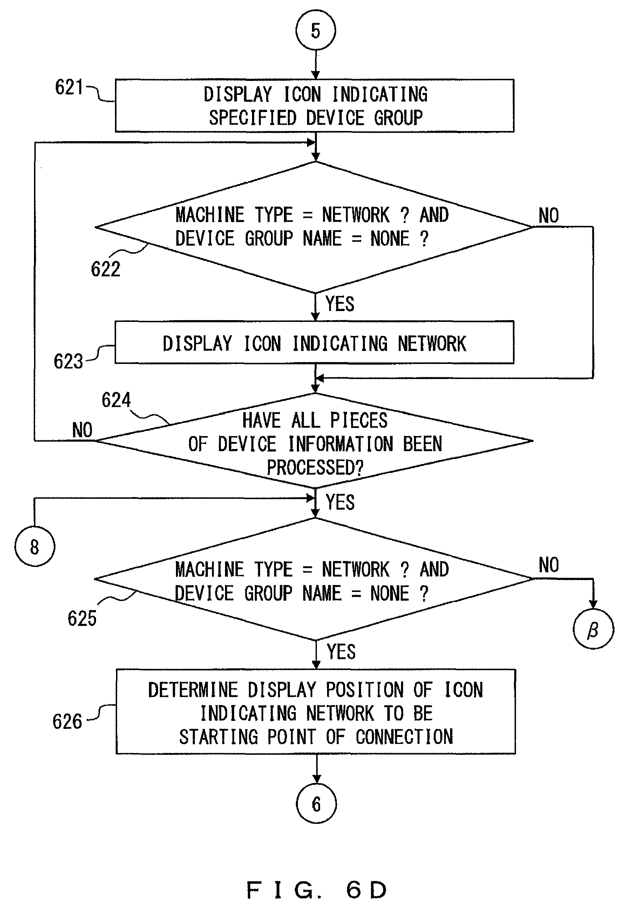

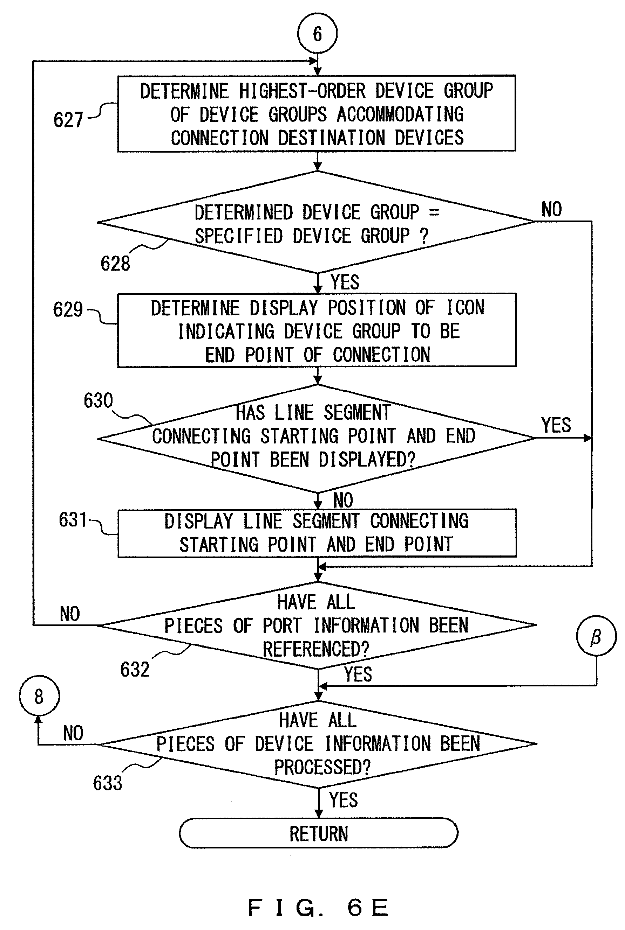

Processing in a case in which an instruction to switch views is not a message indicating an instruction to display the top screen (step 602: NO) is described next with reference to FIGS. 6D and 6E. In this case, the generating unit 312 references device group information 403, and displays an icon indicating a device group on the basis of icon display position information that corresponds to a device group specified by a message (step 621). Hereinafter, the device group specified by the message is referred to as a specified device group.

Then, the generating unit 312 references one piece of device information 401, and checks a machine type and a device group name (step 622). In step 622, the generating unit 312 checks whether a machine type is a network and whether a device group name is "none". When a combination of a machine type and a device group name is the combination above (step 622: YES), the generating unit 312 displays an icon indicating a network on the basis of icon display position information in the device information 401 (step 623). The generating unit 312 then checks whether the process of step 622 and the processes that follow have been performed on all pieces of device information 401 (step 624). When a combination of a machine type and a device group name is different from the combination above (step 622: NO), the generating unit 312 skips the process of step 623, and performs the checking process of step 624. When there are pieces of device information 401 on which the process of step 622 and the processes that follow have not been performed (step 624: NO), the generating unit 312 performs the process of step 622 and the processes that follow on the unprocessed pieces of device information 401.

When the process of step 622 and the processes that follow have been performed on all pieces of device information 401 (step 624: YES), the generating unit 312 performs a process of connecting icons. In the process of connection icons, the generating unit 312 first references one piece of device information 401, and checks a machine type and a device group name (step 625). In step 625, the generating unit 312 checks whether a machine type is a network and whether a device group name is "none". When a combination of a machine type and a device group name is different from the combination above, the generating unit 312 skips the processes of steps 626 to 632, and performs the checking process of step 633.

When a combination of a machine type and a device group name is the combination above (step 625: YES), the generating unit 312 determines an icon position specified by icon display position information in the device information 401 to be a starting point of a connection (step 626).

Then, as illustrated in FIG. 6E, the generating unit 312 references one piece of port information 402 indicated by the device information 401, and determines the highest-order device group of device groups accommodating connection destination devices on the basis of a connection destination device and the device group information 403 (step 627).

The generating unit 312 then checks whether a specified device group matches the device group determined in step 627 (step 628). When a specified device group does not match the device group determined in step 627 (step 628: NO), the generating unit 312 skips the processes of steps 629 to 631, and performs the checking process of step 632.

When a specified device group matches the device group determined in step 627 (step 628: YES), the generating unit 312 determines an icon display position based on icon display position information of the device group determined in step 627 to be an end point of the connection (step 629).

Then, the generating unit 312 checks whether a line segment connecting the starting point and the end point that have been determined has been displayed (step 630). When a line segment connecting the starting point and the end point that have been determined has not been displayed (step 630 : NO), the generating unit 312 displays the line segment connecting the starting point and the end point (step 631). The generating unit 312 then checks whether all pieces of port information 402 indicated by the device information 401 have been referenced in the process of step 627 and the processes that follow (step 632). When a line segment connecting the starting point and the end point that have been determined has been displayed (step 630: YES), the generating unit 312 skips the process of step 631, and performs the checking process of step 632.

When there are pieces of port information 402 that have not been referenced in the process of step 627 and the processes that follow (step 632: NO), the generating unit 312 performs the process of step 627 and the processes that follow on the pieces of port information 402 that have not been referenced.

When all pieces of port information 402 have been referenced and processed (step 632: YES), the generating unit 312 checks whether the process of step 625 and the processes that follow have been performed on all pieces of device information 401 (step 633). The checking process of step 633 is also performed when a combination of a machine type and a device group name of the device information 401 referenced in step 625 is not a combination of a network and "none" (step 625: NO). When there are pieces of device information 401 on which the process of step 625 and the processes that follow have not been processed (step 633: NO), the generating unit 312 performs the process of step 625 and the processes that follow on the unprocessed pieces of device information 401. When the process of step 625 and the processes that follow have been performed on all pieces of device information 401 (step 633 : YES), the generating unit 312 terminates the view switching process (return).

### [Device group developing process]

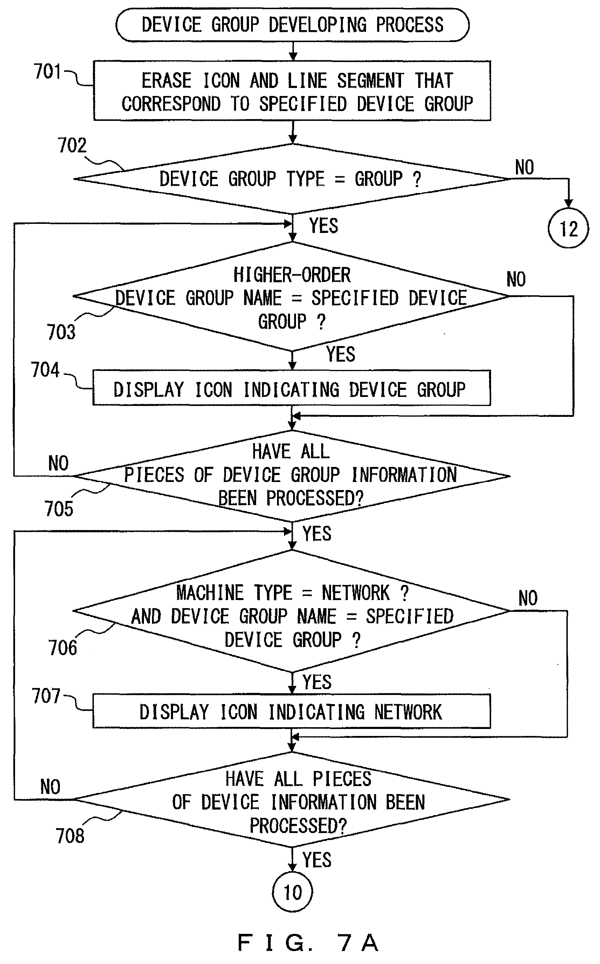

FIGS. 7A to 7D are flowcharts illustrating the content of a device group developing process.

Upon receipt of a message indicating an instruction to develop a device group, the generating unit 312 first erases an icon that corresponds to the device group specified by the message and a line segment indicating a connection relationship between the icon and another icon, as illustrated in FIG. 7A (step 701). Hereinafter, the device group specified by the message is referred to as a specified device group.

Then, the generating unit 312 references the device group information 403, and checks a device group type of the specified device group (step 702). When a device group type is "group" (step 702: YES), the generating unit 312 continuously performs the processes of steps 703 to 722. When a device group type is "device" (step 702: NO), the generating unit 312 performs the processes of steps 731 to 733 and the processes of steps 717 to 722. Stated another way, when there is a device group in a lower order of a specified device group, the generating unit 312 performs the processes of steps 703 to 722. When there are no device groups in a lower order of a specified device group, the generating unit 312 performs the processes of steps 731 to 733 and the processes of steps 717 to 722.

When a device group type is "group", the generating unit 312 performs a process of displaying an icon. In the process of displaying the icon, the generating unit 312 first references one piece of device group information 403, and checks whether a higher-order device group name is a specified device group (step 703). When a higher-order device group name is a specified device group (step 703 : YES), the generating unit 312 displays an icon indicating a device group on the basis of icon display position information of the device group information 403 (step 704). Then, the generating unit 312 checks whether the process of step 703 and the processes that follow have been performed on all pieces of device group information 403 (step 705). When a higher-order device group name is not a specified device group (step 703: NO), the generating unit 312 skips the process of step 704, and performs the checking process of step 705.

When there are pieces of device group information 403 on which the process of step 703 and the processes that follow have not been performed (step 705: NO), the generating unit 312 performs the process of step 703 and the processes that follow on the unprocessed pieces of device group information 403.

When the process of step 703 and the processes that follow have been performed on all pieces of device group information 403 (step 705: YES), the generating unit 312 references one piece of device information 401, and checks a combination of a machine type and a device group name (step 706). In step 706, the generating unit 312 checks whether a machine type is "network" and whether a device group name is a specified device group. When a combination of a machine type and a device group name is the combination above (step 706: YES), the generating unit 312 displays an icon indicating a network on the basis of icon display position information in the device information 401 (step 707). Then, the generating unit 312 checks whether the process of step 706 and the processes that follow have been performed on all pieces of device information 401 (step 708). When a combination of a machine type and a device group name is different from the combination above (step 706: NO), the generating unit 312 skips the process of step 707, and performs the checking process of step 708.

When there are pieces of device information 401 on which the process of step 706 and the processes that follow have not been performed (step 708: NO), the generating unit 312 performs the process of step 706 and the processes that follow on the unprocessed pieces of device information 401.

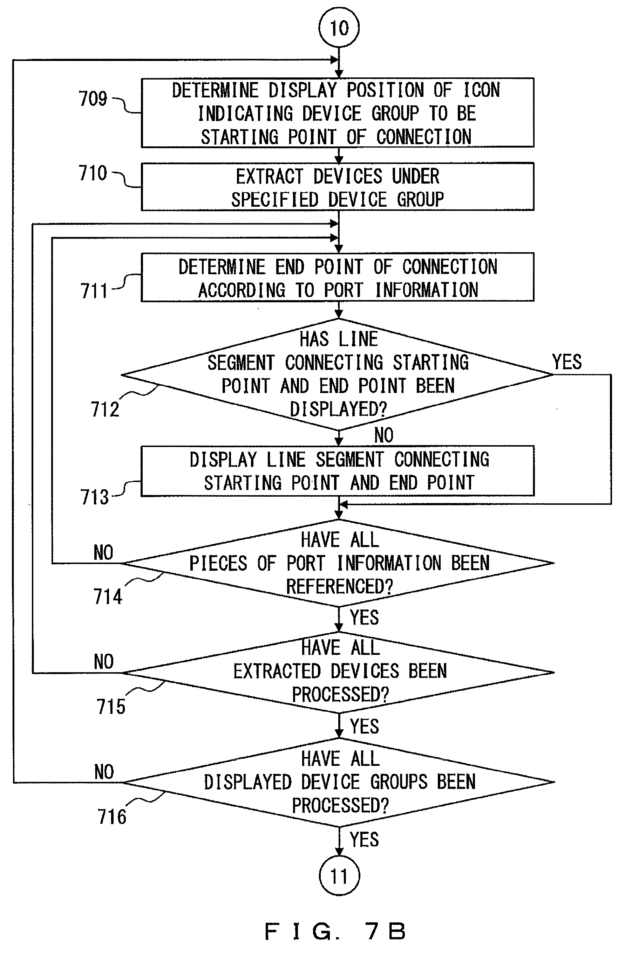

When the process of step 706 and the processes that follow have been performed on all pieces of device information 401 (step 708: YES), the generating unit 312 performs a process of connecting icons. In the process of connecting the icons, the generating unit 312 first determines a display position of the icon indicating the device group displayed in step 704 to be a starting point of a connection, as illustrated in FIG. 7B (step 709). When a plurality of device groups have been displayed in step 704, the generating unit 312 selects one of the plurality of device groups, and determines a display position of an icon indicating the selected device group to be a starting point of a connection.

Then, the generating unit 312 retrieves the device group information 403 and the device information 401 by using a device group name of the displayed device group as key information, and recursively extracts devices under the specified device group (step 710).

Then, the generating unit 312 references one piece of port information 402 indicated by device information 401 of the extracted device, and determines an end point of the connection on the basis of a connection destination device and a connection destination port (step 711).

Then, the generating unit 312 checks whether a line segment connecting the starting point and the end point that have been determined has been displayed (step 712). When a line segment connecting the starting point and the end point that have been determined has not been displayed (step 712 : NO), the generating unit 312 displays the line segment connecting the starting point and the end point that have been determined (step 713). Then, the generating unit 312 checks whether all pieces of port information 402 indicated by the device information 401 have been referenced in the process of step 711 and the processes that follow (step 714). When a line segment connecting the starting point and the end point that have been determined has been displayed (step 712: YES), the generating unit 312 skips the process of step 713, and performs the checking process of step 714.

When there are pieces of port information 402 that have not been referenced in the process of step 711 and the processes that follow (step 714: NO), the generating unit 312 performs the process of step 711 and the processes that follow on the pieces of port information 402 that have not been referenced.

When all pieces of port information 402 have been referenced and processed (step 714: YES), the generating unit 312 checks whether the process of step 711 and the processes that follow have been performed on all of the devices extracted in step 710 (step 715). When there are unprocessed devices (step 715: NO), the generating unit 312 performs the process of step 711 and the processes that follow on the unprocessed devices.

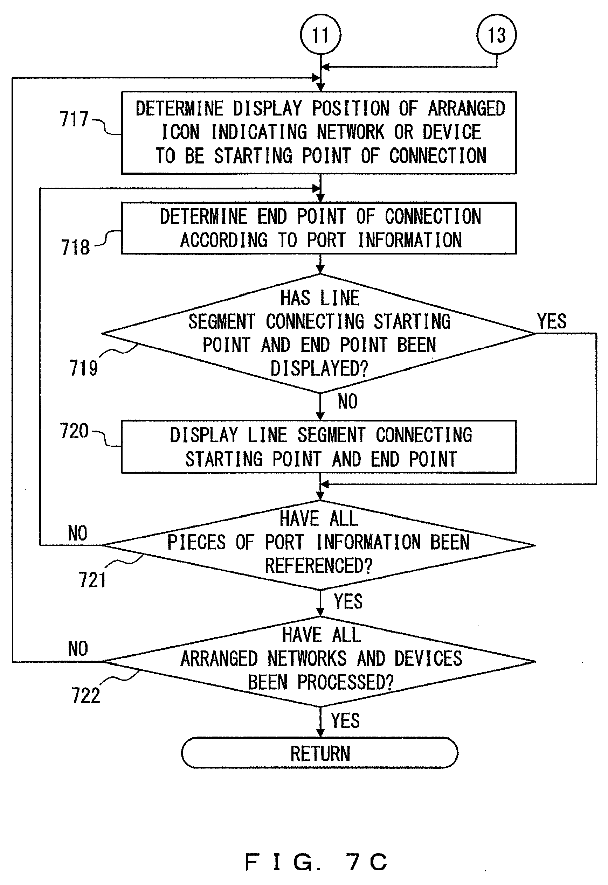

When the process of step 711 and the processes that follow have been performed on all of the extracted devices (step 715: YES), the generating unit 312 checks whether the process of step 709 and the processes that follow have been performed on all of the device groups for which an icon has been displayed in step 704 (step 716). When there are device groups on which the process of step 709 and the processes that follow have not been performed (step 716: NO), the generating unit 312 performs the process of step 709 and the processes that follow on the unprocessed device groups. When the process of step 709 and the processes that follow have been performed on all of the device groups (step 716: YES), the generating unit 312 determines one of the arranged (displayed) icons indicating a network or a device to be a starting point of a connection, as illustrated in FIG. 7C (step 717).

The generating unit 312 then references one piece of port information 402 indicated by the device information 401 of a network or a device that corresponds to the determined starting point, and determines an end point of the connection on the basis of a connection destination device and a connection destination port (step 718).

The generating unit 312 then checks whether a line segment connecting the starting point and the end point that have been determined has been displayed (step 719). When a line segment connecting the starting point and the end point that have been determined has not been displayed (step 719 : NO), the generating unit 312 displays the line segment connecting the starting point and the end point that have been determined (step 720). The generating unit 312 checks whether all pieces of port information 402 have been referenced in the process of step 718 and the processes that follow (step 721). When a line segment connecting the starting point and the end point that have been determined has been displayed (step 719: YES), the generating unit 312 skips the process of step 720, and performs the checking process of step 721.

When there are pieces of port information 402 that have not been referenced in the process of step 718 and the processes that follow (step 721: NO), the generating unit 312 performs the process of step 718 and the processes that follow on the pieces of port information 402 that have not been referenced.

When all pieces of port information 402 have been referenced and processed (step 721: YES), the generating unit 312 checks whether there are networks or devices on which the process of step 717 and the processes that follow have not been performed from among the arranged networks and devices (step 722). When there are unprocessed networks or devices (step 722: NO), the generating unit 312 performs the process of step 717 and the processes that follow on pieces of port information 402 indicated by pieces of device information 401 of the unprocessed networks and devices.

When there are no unprocessed networks or devices (step 722 : YES), the generating unit 312 terminates the device group developing process (return).

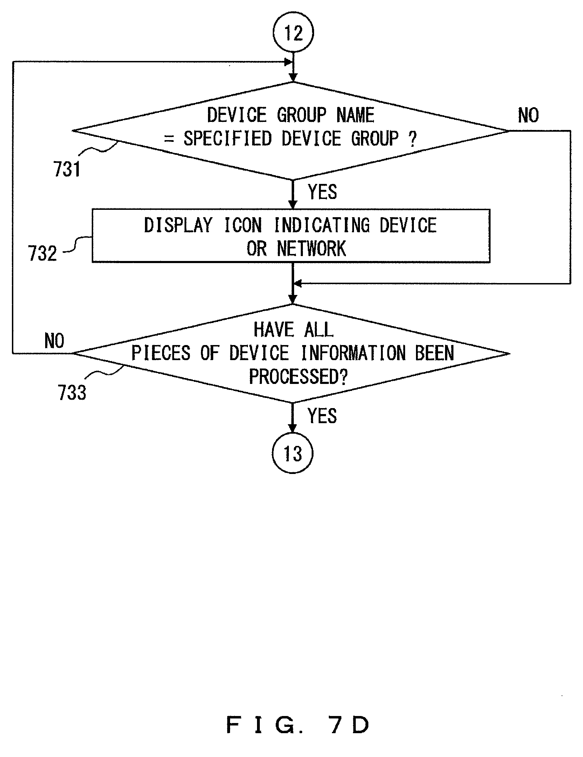

A process in a case in which a device group type of a specified device group is "device" (step 702: NO) is described next with reference to FIG. 7D. In this case, the generating unit 312 references one piece of device information 401, and checks whether a device group name matches a specified device group (step 731). When a device group name matches a specified device group (step 731: YES), the generating unit 312 displays an icon indicating a device or a network on a screen on the basis of a machine type and icon display position information of the referenced device information 401 (step 732). The generating unit 312 then checks whether the process of step 731 and the processes that follow have been performed on all pieces of device information 401 (step 733). When a device group name does not match a specified device group (step 731: NO), the generating unit 312 skips the process of step 732, and performs the checking process of step 733.

When there are pieces of device information 401 on which the process of step 731 and the processes that follow have not been performed (step 733 : NO), the generating unit 312 performs the process of step 731 and the processes that follow on the unprocessed pieces of device information 401. When there are no unprocessed pieces of device information 401 (step 733: YES), the generating unit 312 performs a process of connecting the displayed icons indicating a device or a network (steps 717 to 722), and the generating unit 312 terminates the device group developing process (return).

### [Device group converging process]

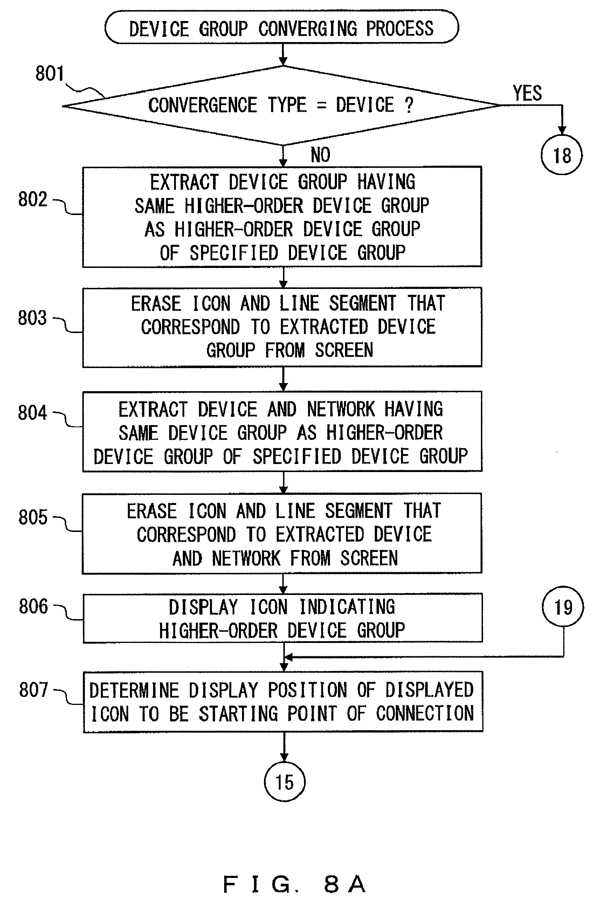

FIGS. 8A to 8C are flowcharts illustrating the content of a device group converging process.

Upon receipt of a message indicating an instruction to converge a device group, the generating unit 312 first checks whether a convergence type is "device" (step 801), as illustrated in FIG. 8A. The convergence type indicates a relationship between displays before and after convergence, and the convergence type "device" means that a displayed icon indicating a device is changed into an icon indicating a device group that the device belongs to. A convergence type that is not "device" means that a displayed icon indicating a device group is changed into an icon indicating a device group in an order higher than that of the device group.

When a convergence type is not "device" (step 801: NO), the generating unit 312 performs the processes of steps 802 to 806 and the processes of steps 807 to 813. When a convergence type is "device" (step 801: YES), the generating unit 312 performs the processes of steps 821 to 823 and the processes of steps 807 to 813.

When a convergence type is not "device", the generating unit 312 references the device group information 403, and recursively extracts all of the device groups having a higher-order device group that is the same as the higher-order device group of a specified device group (step 802). The generating unit 312 erases all of the icons that correspond to the extracted device groups and all of the line segments each indicating a connection relationship (step 803).

Then, the generating unit 312 references the device information 401 and the device group information 403, and recursively extracts all of the devices and networks having the same device group as the higher-order device group of the specified device group (step 804). The generating unit 312 erases all of the icons indicating the extracted devices and all of the line segments each indicating a connection relationship (step 805).

Then, the generating unit 312 displays an icon that corresponds to the higher-order device group of the specified device group on the basis of the device group information 403 (step 806).

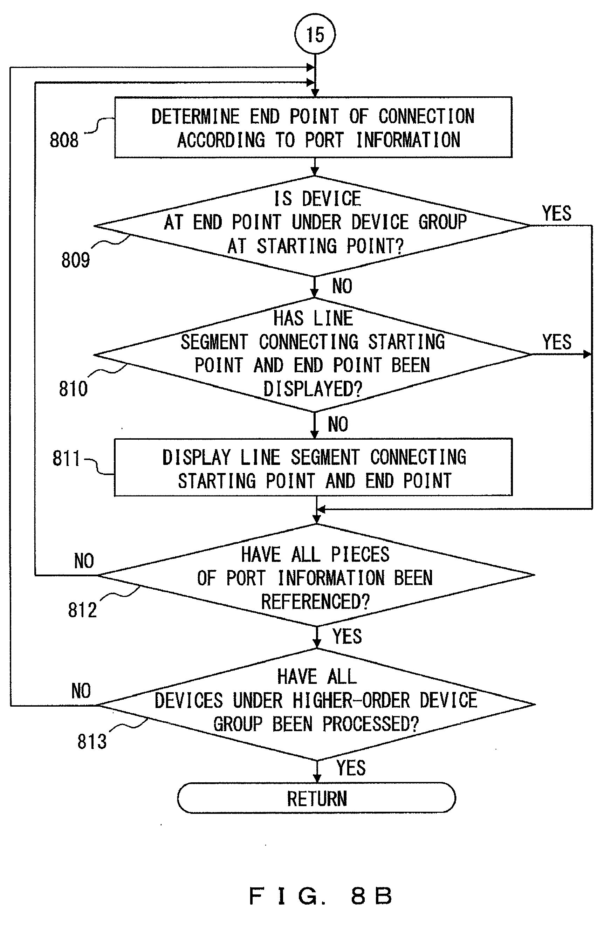

The generating unit 312 determines an arranged (displayed) icon indicating a device group to be a starting point of a connection (step 807), and performs a process of connecting displayed icons. In the process of connecting the icons, the generating unit 312 first determines an end point of the connection on the basis of the port information 402 (step 808), as illustrated in FIG. 8B. In step 808, the generating unit 312 selects one device under the higher-order device group, and determines an end point of the connection on the basis of a connection destination device and a connection destination port in one piece of port information 402 indicated by the device information 401 of the selected device.

Then, the generating unit 312 checks whether a device that is an end point of a connection is under a device group that is a starting point of the connection (step 809). When a device that is an end point of a connection is under a device group that is a starting point of the connection (step 809: YES), the generating unit 312 skips the processes of steps 810 and 811, and performs the checking process of step 812.

When a device that is an end point of a connection is not under a device group that is a starting point of the connection (step 809: NO), the generating unit 312 checks whether a line segment connecting the starting point and the end point that have been determined has been displayed (step 810). When a line segment connecting the starting point and the end point that have been determined has been displayed (step 810: YES), the generating unit 312 skips the process of step 811, and performs the checking process of step 812.

When a line segment connecting the starting point and the end point that have been determined has not been displayed (step 810: NO), the generating unit 312 displays the line segment connecting the starting point and the end point that have been determined (step 811). Then, the generating unit 312 checks whether all pieces of port information 402 indicated by the one selected piece of device information 401 have been referenced in the process of step 808 and the processes that follow (step 812). As described above, the process of step 812 is also performed when a device at an end point is under a device group at a starting point (step 809: YES), and when a line segment connecting a starting point and an end point has been displayed (step 810: YES).

When there are pieces of port information 402 that have not been referenced in the process of step 808 and the processes that follow (step 812: NO), the generating unit 312 performs the process of step 808 and the processes that follow on the pieces of port information 402 that have not been referenced.

When all pieces of port information 402 have been referenced and processed (step 812: YES), the generating unit 312 checks whether the process of step 808 and the processes that follow have been performed on all of the devices under a higher-order device group (step 813). When there are unprocessed devices (step 813: NO), the generating unit 312 performs the process of step 808 and the processes that follow on the unprocessed devices. When there are no unprocessed devices (step 813 : YES), the generating unit 312 terminates the device group converging process (return).

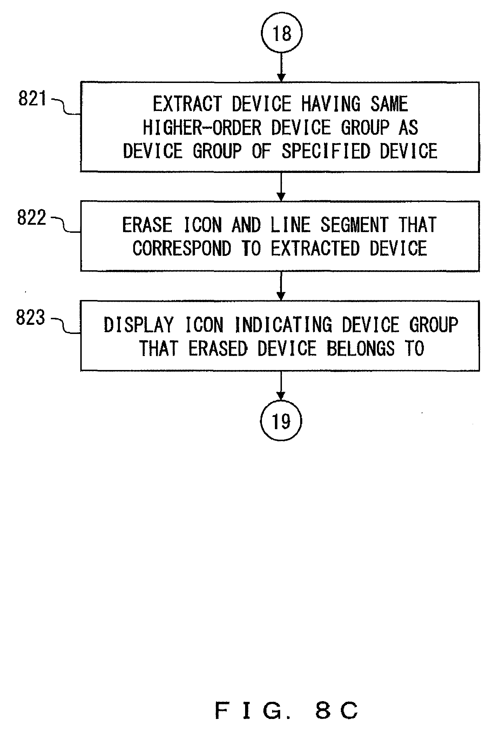

A process in which a convergence type is "device" (step 801: YES) is described next with reference to FIG. 8C. In this case, the generating unit 312 references the device information 401 and the device group information 403, and extracts all of the devices and networks that have the same higher-order device group as a device group of a specified device (step 821).

The generating unit 312 then erases all of the icons that correspond to the extracted devices and networks and all of the line segments each indicating a connection relationship (step 822).

Then, the generating unit 312 displays an icon indicating a device group that the erased devices belong to (step 823). In step 823, the generating unit 312 references the device group information 403, and displays an icon indicating a device group on the basis of icon display position information for a higher-order device group of a device group of a specified device.

The generating unit 312 performs the processes above of steps 807 to 813, displays a line segment indicating a connection relationship between the displayed icons, and terminates the device group converging process (return).

### [Specific examples]

Two specific examples of a display process according to the embodiments are described below. The specific examples below describe a screen transition when a topology screen of devices included in Kanto group 101 in the communication network 100 illustrated in FIG. 1 is displayed.

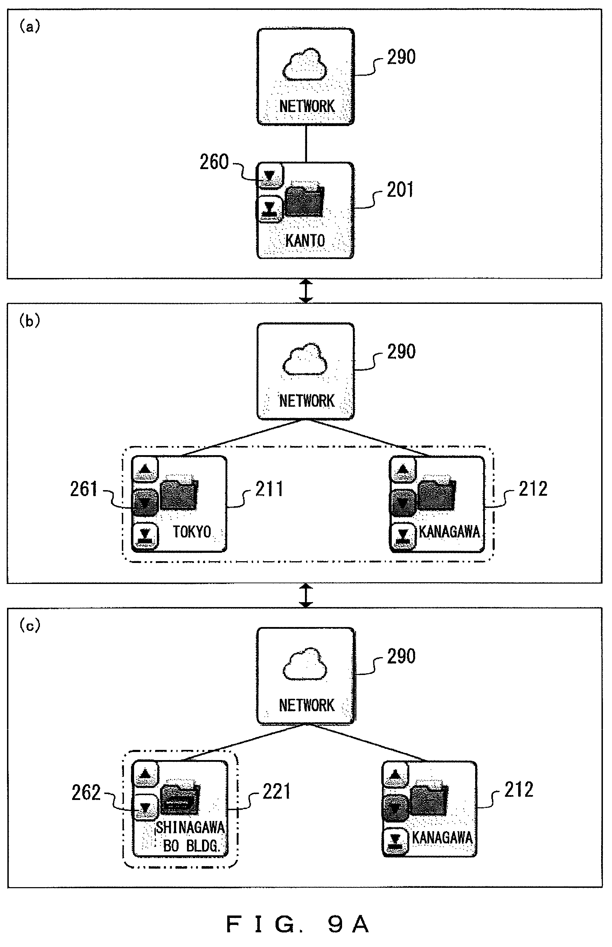

FIGS. 9A to 9C illustrate a first example of a screen transition in a display process according to the embodiments. In the first example, a screen transition in a case in which a specific device group has not been specified when an icon indicating a network is registered is described. In this case, a device group name in the device information 401 relating to a network has information indicating that a device group has not been specified, such as "none".

When a prescribed view switching operation is performed in such a way that a display of Kanto group 101 is selected, an icon 290 indicating a network is displayed on a higher-order side of an icon 201 indicating Kanto group on a display screen, as illustrated in (a) of FIG. 9A. A line segment connecting the icon 201 indicating Kanto group and the icon 290 indicating the network is also displayed.

In this state, when an operation such as clicking is performed on a button for development 260 on a side of a left-hand end of the icon 201 indicating Kanto group, the generating unit 312 receives a message indicating an instruction to develop a device group, and performs the device group developing process (step 503).

As illustrated in FIG. 1, two device groups, Tokyo group and Kanagawa group, are under Kanto group. Therefore, when Kanto group is developed, an icon 211 indicating Tokyo group and an icon 212 indicating Kanagawa group are displayed, as illustrated in (b).

When a specific device group has not been specified when the icon 290 indicating the network is registered, the icon 290 is always displayed in the highest order, as described above. Accordingly, the generating unit 312 displays the icon 211 indicating Tokyo group and the icon 212 indicating Kanagawa group, and also displays a line segment connecting each of the icons 211 and 212 and the icon 290 indicating the network.

When an operation is performed on a button for development 261 on a side of a left-hand end of the icon 211 indicating Tokyo group, the icon 211 indicating Tokyo group disappears, and an icon 221 indicating Shinagawa group is displayed, as illustrated in (c). Also in this case, a line segment connecting the icon 221 indicating Shinagawa group and the icon 290 indicating the network is displayed.

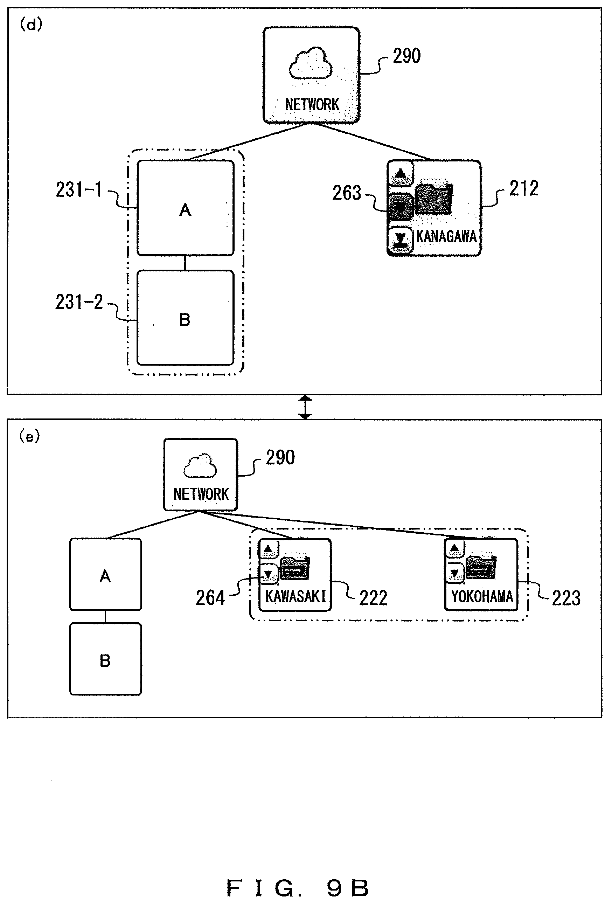

When an operation is performed on a button for development 262 on a side of a left-hand end of the icon 221 indicating Shinagawa group, the icon 221 indicating Shinagawa group disappears, and an icon 231-1 indicating a device A and an icon 231-2 indicating a device B are displayed, as illustrated in (d) of FIG. 9B. When a plurality of devices are displayed, as described above, a line segment connecting a device for which a network has been registered as a connection destination device in the port information 402 indicated by the device information 401 to the icon 290 indicating the network is displayed. Accordingly, when a network has been registered as a connection destination device in the port information 402 indicated by the device information 401 of the device A of the devices A and B, a line segment connecting the icon 231-1 indicating the device A and the icon 290 indicating the network is displayed on a display screen. In addition, a line segment connecting the icon 231-1 indicating the device A and the icon 231-2 indicating the device B is displayed on the display screen.

While the screen changes from a state illustrated in (b) of FIG. 9A to a state illustrated in (d) of FIG. 9B, the icon 212 indicating Kanagawa group and the line segment connecting the icon 212 indicating Kanagawa group and the icon 290 indicating the network, as well as the icon 290 indicating the network, are still being displayed. Therefore, from a display illustrated in (d) of FIG. 9B, it can be understood easily that the device A and the device B that belong to a device group named Shinagawa branch office are connected to a device group named Kanagawa via a network.

When an operation is performed on a button for development 263 of the icon 212 indicating Kanagawa group, the display screen changes to a state illustrated in (e). Stated another way, the icon 212 indicating Kanagawa group disappears, and an icon 222 indicating Kawasaki group and an icon 223 indicating Yokohama group are displayed. Also in this case, a line segment connecting each of the icon 222 indicating Kawasaki group and the icon 223 indicating Yokohama group and the icon 290 indicating the network, as well as the icons 222 and 223, are displayed.

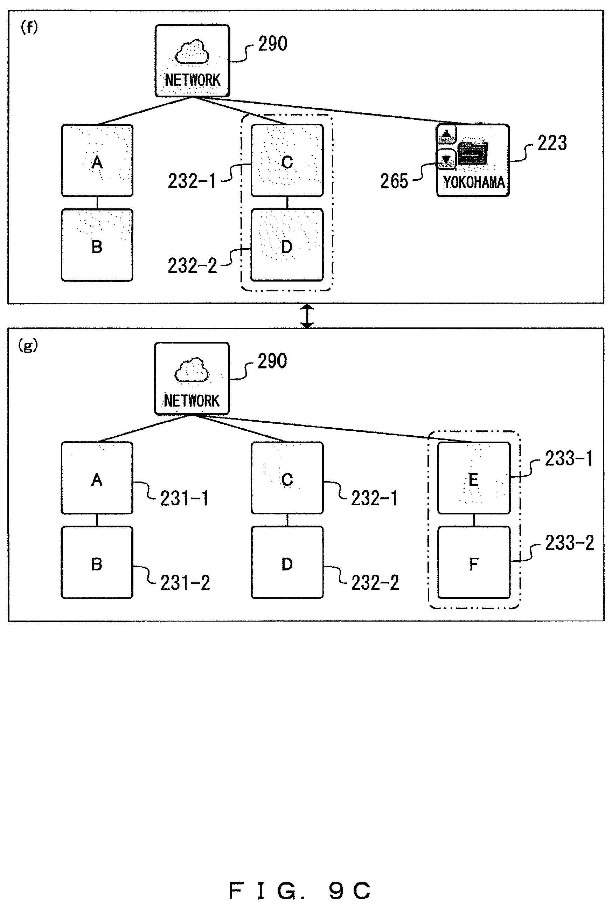

When an operation is performed on a button for development 264 of the icon 222 indicating Kawasaki group, the icon 222 indicating Kawasaki group disappears, and icons 232-1 and 232-2 respectively indicating devices C and D that belong to Kawasaki group are displayed, as illustrated in (f) of FIG. 9C. Also in this case, a line segment connecting the icon 232-1 indicating the device C and the icon 290 indicating the network and a line segment connecting the icon 232-1 indicating the device C and the icon 232-2 indicating the device D, as well as the icons 232-1 and 232-2, are displayed.

When an operation is performed on a button for development 265 of the icon 223 indicating Yokohama group, the icon 223 indicating Yokohama group disappears, and icons 233-1 and 233-2 respectively indicating devices E and F that belong to Yokohama group are displayed, as illustrated in (g). Also in this case, a line segment connecting the icon 233-1 indicating the device E and the icon 290 indicating the network and a line segment connecting the icon 233-1 indicating the device E and the icon 233-2 indicating the device F, as well as the icons 233-1 and 233-2, are displayed.

Although a detailed description is omitted, when an operation to converge a device group is performed on any screen of the screens illustrated in (b) of FIG. 9A to (e) of FIG. 9B and (f) and (g) of FIG. 9C, an icon indicating a corresponding device group or icons indicating corresponding devices disappear, and an icon indicating a higher-order device group is displayed. Also in a case in which a device group is converged, the icon 290 indicating the network is always displayed, and a line segment connecting an icon indicating a changed device group and the icon 290 indicating the network is displayed.

As described above, in a case in which a specific device group name has not been specified in the device information 401 of a network, the icon 290 indicating the network (a first symbol) is always displayed in the highest-order position. When a device group to which a device having the port information 402 in which the network is a connection destination device belongs is displayed, a line segment connecting an icon indicating the device group and an icon indicating the network is also displayed, regardless of a hierarchy of the device group. Thus, according to the embodiments, a connection relationship between device groups connected via a network or a connection relationship between devices can be easily grasped.

In addition, in the reference example illustrated in FIGS. 2A and 2B, a topology screen indicating a connection relationship between an icon indicating a network and icons indicating devices that belong to a device group is generated for each of the device groups. Therefore, as the number of devices connected to the network that are displayed on one screen increases, resources used to display the icon indicating the network also increase.

On the other hand, according to the embodiments, even when the number of devices connected to a network that are displayed on one screen increases, in a case in which these devices are connected via one network, the only one icon indicating a network is displayed. Accordingly, resources used to display the icon indicating the network can be prevented from increasing.

As a second example of a screen transition, a screen transition in a case in which "Kanagawa" is specified as a specific device group when an icon indicating a network is registered is described next. In this case, a device group name in the device information 401 relating to the network has the information "Kanagawa".

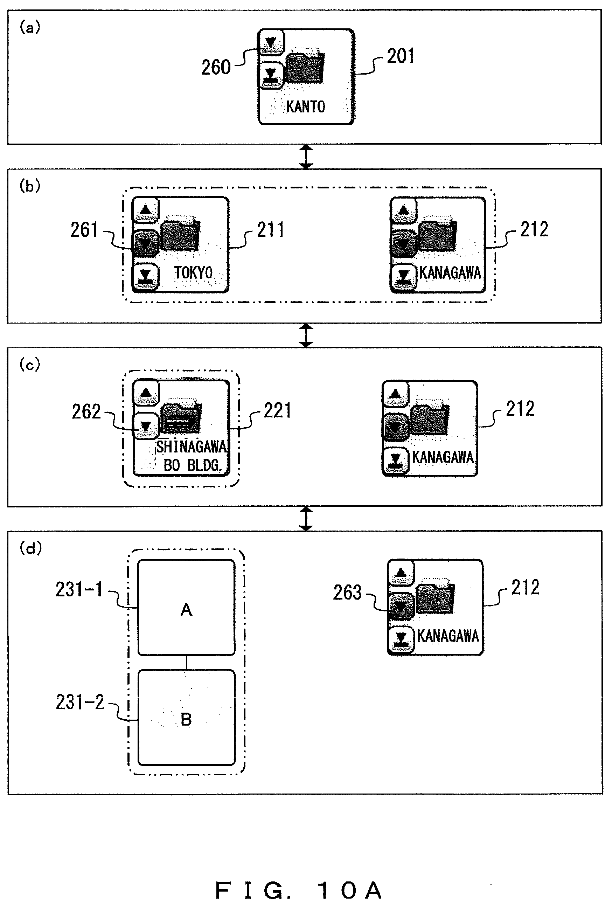

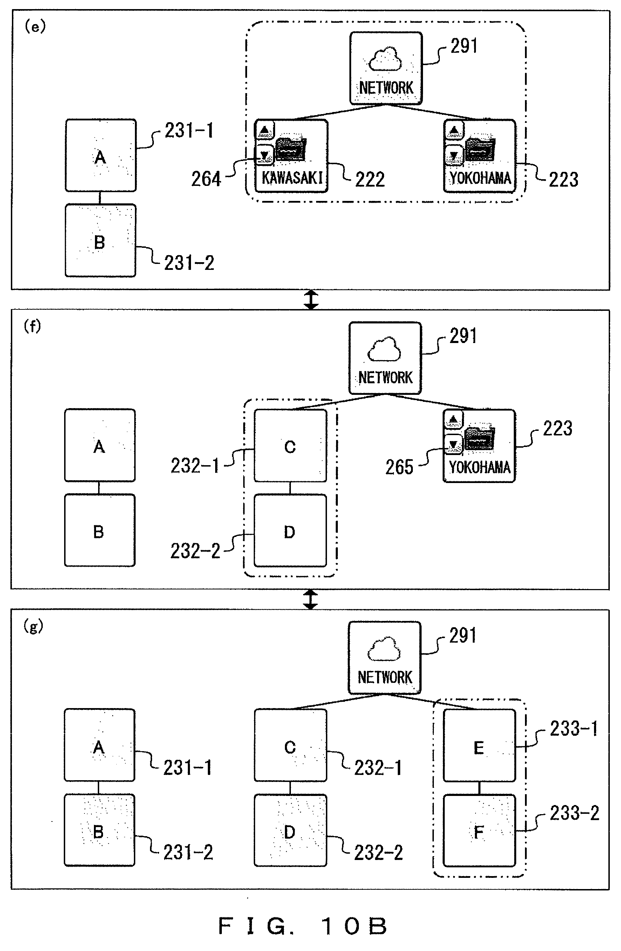

FIGS. 10A and 10B illustrate a second example of a screen transition in a display process according to the embodiments.

In the second example, the device group "Kanagawa" has been specified in the device information 401 of a network. Accordingly, an icon indicating a network is not displayed when an icon indicating Kanagawa group and an icon indicating a device group that has a higher order than Kanagawa group are displayed. Accordingly, when a prescribed view switching operation is performed in such a way that a display of Kanto group 101 is selected, an icon 201 indicating Kanto group is merely displayed on a display screen, as illustrated in (a) of FIG. 10A.

In this state, when an operation is performed on a button for development 260 on a side of a left-hand end of the icon 201 indicating Kanto group, the icon 201 indicating Kanto group disappears, and an icon 211 indicating Tokyo group and an icon 212 indicating Kanagawa group are displayed, as illustrated in (b). Also in this case, an icon indicating a network is not displayed.

When an operation is performed on a button for development 261 of the icon 211 indicating Tokyo group, the icon 211 indicating Tokyo group disappears, and an icon 221 indicating Shinagawa group is displayed, as illustrated in (c).

When an operation is performed on a button for development 262 of the icon 221 indicating Shinagawa group, the icon 221 indicating Shinagawa group disappears, and icons 231-1 and 231-2 respectively indicating devices A and B that belong to Shinagawa group are displayed, as illustrated in (d).

When an operation is performed on a button for development 263 of an icon 212 indicating Kanagawa group, the icon 212 indicating Kanagawa group disappears, and an icon 222 indicating Kawasaki group and an icon 223 indicating Yokohama group that have a lower order than Kanagawa are displayed, as illustrated in (e) of FIG. 10B. In this developing process, an icon indicating a network and icons under Kanagawa group that corresponds to the network are displayed. Therefore, the generating unit 321 displays an icon 291 indicating a network, as well as the icon 222 indicating Kawasaki group and the icon 223 indicating Yokohama group. The generating unit 321 also displays a line segment connecting each of the icon 222 indicating Kawasaki group and the icon 223 indicating Yokohama group to the icon 291 indicating the network. In a case in which the devices A and B have not been registered as connection destination devices in the port information 402 indicated by the device information 401 of the network, the icon 231-1 indicating the device A or the icon 231-2 indicating the device B is not connected to the icon 291 indicating the network.

When an operation is performed on a button for development 264 of the icon 222 indicating Kawasaki group, the icon 222 indicating Kawasaki group disappears, and icons 232-1 and 232-2 respectively indicating devices C and D that belong to Kawasaki group are displayed, as illustrated in (f). A line segment connecting the icon 232-1 indicating the device C and the icon 291 indicating the network and a line segment connecting the icon 232-1 indicating the device C and the icon 232-2 indicting the device D, as well as the icons 232-1 and 232-2, are also displayed.

When an operation is performed on a button for development 265 of the icon 223 indicating Yokohama group, icons 233-1 and 233-2 respectively indicating devices E and F that belong to Yokohama group are displayed, as illustrated in (g). Also in this case, a line segment connecting the icon 233-1 indicating the device E and the icon 291 indicating the network and a line segment connecting the icon 233-1 indicating the device E and the icon 233-2 indicating the device F, as well as the icons 233-1 and 233-2, are displayed.

Although a detailed description is omitted, when an operation to converge a device group is performed on any screen of the screens illustrated in (b) to (d) of FIG. 10A and (e) to (g) of FIG. 10B, an icon indicating a corresponding device group or icons indicating corresponding devices disappear, and an icon indicating a higher-order device group is displayed. Also when a device group is converged, in a case in which icons indicating device groups or devices under Kanagawa group are displayed on a screen after convergence, the icon 291 indicating the network, as well as these icons, is displayed. When the icons indicating the device groups or devices under Kanagawa group are non-displayed, the icon 291 indicating the network is also non-displayed.

As described above, in a case in which a specific device group name has been specified in the device information 401 of a network, the icon 291 (a first symbol) indicating the network is displayed in addition to device groups or devices under a specified device group. When a device group that a device having the port information 402 in which the network is a connection destination device belongs to is displayed, a line segment connecting an icon indicating the device group and an icon indicating the network is also displayed, regardless of a hierarchy of the device group. Accordingly, also in the example illustrated in FIGS. 10A and 10B, a connection relationship between device groups connected via a network or a connection relationship between devices can be easily grasped.

The device information 401, the port information 402, and the device group information 403 of FIGS. 4A and 4B are merely examples, and some pieces of information may be omitted or changed in accordance with a configuration or the information processing device 301 or conditions.

The flowcharts of FIGS. 5, 6A to 6E, 7A to 7D, and 8A to 8C are merely examples, and some processes may be omitted or changed in accordance with the configuration of the information processing device 301 or conditions.

The screen transition illustrated in FIGS. 9A to 9C and the screen transition illustrated in FIGS. 10A and 10B are merely examples of a screen transition, and all or part of display may be changed in accordance with the configuration of the information processing device 301 or conditions.

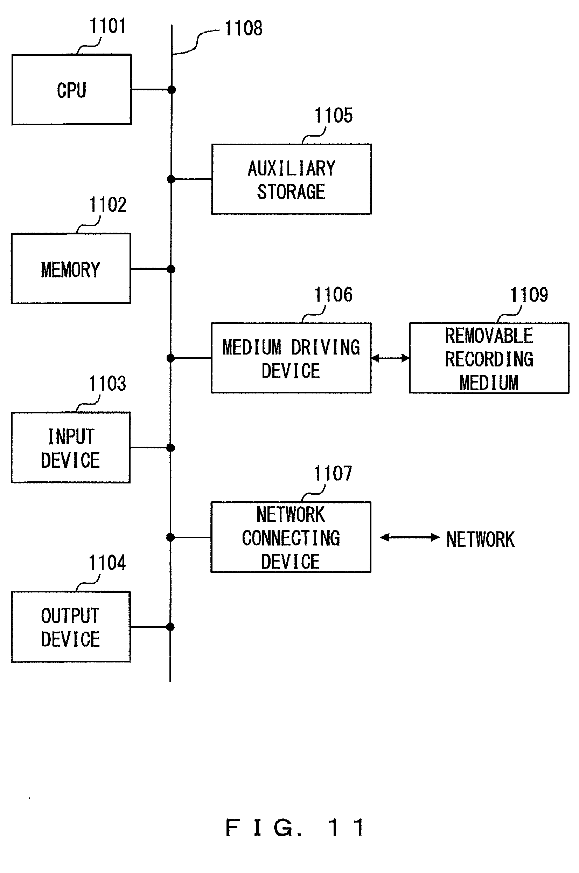

The information processing device 301 of FIG. 3 can be implemented, for example, by using an information processing device (a computer) as illustrated in FIG. 11. FIG. 11 illustrates a hardware configuration of an information processing device.

The information processing device illustrated in FIG. 11 includes a Central Processing Unit (CPU) 1101, a memory 1102, an input device 1103, an output device 1104, an auxiliary storage 1105, a medium driving device 1106, and a network connecting device 1107. These components are connected to each other via a bus 1108.

The memory 1102 is, for example, a semiconductor memory such as a Read Only Memory (ROM), a Random Access Memory (RAM), or a flash memory. The memory 1102 stores a program and data for the display process above. The memory 1102 can be used as the storing unit 311 of FIG. 3.

The CPU 1101 (a processor) operates as the generating unit 312 of FIG. 3, for example, by executing a program by using the memory 1102, and performs the display process above (the view switching process, the device group developing process, and the device group converging process).

The input device 1103 is, for example, a keyboard, a pointing device, or the like, and the input device 1103 is used to input instructions or information from a user or an operator. The output device 1104 is, for example, a display device, a printer, a speaker, or the like, and the output device 1104 is used to output inquiries or processing results to a user or an operator. The processing result may be a symbol indicating a device group, a device, or the like, or an image of a display screen including a line segment connecting two symbols.

The auxiliary storage 1105 is, for example, a magnetic disk drive, an optical disk drive, a magneto-optic disk drive, a tape device, or the like. The auxiliary storage 1105 may be a hard disk drive or a flash memory. The information processing device stores a program and data in the auxiliary storage 1105, and can use the program and data by loading the program and data onto the memory 1102. The auxiliary storage 1105 can be use as the storing unit 311 of FIG. 3.

The medium driving device 1106 drives a removable recording medium 1109, and accesses the recorded content. Examples of the removable recording medium 1109 include a memory device, a flexible disk, an optical disk, and a magneto-optic disk. The removable recording medium 1109 may be a Compact Disk Read Only Memory (CD-ROM), a Digital Versatile Disk (DVD), a Universal Serial Bus (USB) memory, or the like. A user or an operator can store a program and data in the removable recording medium 1109, and can use the program and data by loading the program and data onto the memory 1102.

As described above, a computer-readable recording medium that stores a program and data is a physical (non-transitory) recording medium such as the memory 1102, the auxiliary storage 1105, or the removable recording medium 1109.

The network connecting device 1107 is connected to a communication network such as a Local Area Network (LAN) or the Internet, and the network connecting device 1107 is a communication interface that performs data conversion accompanying communication. The information processing device can receive a program and data from an external device via the network connecting device 1107, and can use the program and data by loading the program and data onto the memory 1102.

The information processing device can receive instructions or information from a user terminal via the network connecting device 1107, can perform the display process above, and can transmit display data displaying an image of a display screen to the user terminal.

The information processing device does not need to include all of the components illustrated in FIG. 11, and some of the components can be omitted in accordance with purposes or conditions. As an example, in a case in which the information processing device receives instructions or information from a user terminal via a communication network, the input device 1103 and the output device 1104 may be omitted. In a case in which the information processing device does not access the removable recording medium 1109 or a communication network, the medium driving device 1106 or the network connecting device 1107 may be omitted.

In a case in which the information processing device is a mobile terminal having a call function, such as a smartphone, the information processing device may include a device for a call, for example, a microphone and a speaker, or may include an imaging device such as a camera.

The embodiments of the disclosure and the advantages thereof have been described in detail; however, those skilled in the art can make various modifications, additions, or omissions without departing from the scope of the present invention specified in the claims.

## Claims

1. A display method comprising:
displaying, by a computer, a first symbol indicating a communication network, displaying a second symbol indicating a device group to be displayed from among a first device group that a device belongs to and a second device group that has a higher order than the first device group, and non-displaying a symbol indicating a device group that is not a target to be displayed from among the first device group and the second device group; and
displaying, by a computer, a line segment connecting the first symbol and the second symbol.

2. The display method according to claim 1, wherein
in a case in which a device group that the communication network belongs to is not specified, whichever of the first device group and the second device group is the device group to be displayed, the computer displays the first symbol, the second symbol, and the line segment.

3. The display method according to claim 1, wherein
the computer displays the first symbol, the second symbol, and the line segment in a case in which the second device group is specified as the device group that the communication network belongs to and the device group to be displayed is the first device group, and
the computer displays the second symbol, and non-displays the first symbol and the line segment in a case in which the first device group is specified as the device group that the communication network belongs to and the device group to be displayed is the first device group.

4. The display method according to claim 2 or 3, further comprising:
displaying, by the computer, a third symbol indicating a third device group connected to the second device group via the communication network, and displaying a line segment connecting the first symbol and the third symbol.

5. The display method according to claim 2 or 3, wherein
in a case in which the computer receives an instruction to change the device group to be displayed from the first device group to the device in a state in which the device group to be displayed is the first device group, the computer non-displays the second symbol and the line segment, displays a fourth symbol indicating the device, and displays a line segment connecting the first symbol and the fourth symbol.

6. A display program for causing a computer to execute a display process, the display process comprising:
displaying a first symbol indicating a communication network, displaying a second symbol indicating a device group to be displayed from among a first device group that a device belongs to and a second device group that has a higher order than the first device group, and non-displaying a symbol indicating a device group that is not a target to be displayed from among the first device group and the second device group; and
displaying a line segment connecting the first symbol and the second symbol.

7. An information processing device comprising:
a storing unit configured to store information relating to a device, information relating to a first device group that the device belongs to, and information relating to a second device group that has a higher order than the first device group; and
a generating unit configured to generate display data that displays a first symbol indicating a communication network, displays a second symbol indicating a device group to be displayed from among a first device group that a device belongs to and a second device group that has a higher order than the first device group, non-displays a symbol indicating a device group that is not a target to be displayed from among the first device group and the second device group, and displays a line segment connecting the first symbol and the second symbol.
